# EUROPEAN PATENT SPECIFICATION

(11) **EP 0 722 869 B1**
(45) Date of publication and mention of the grant of the patent: **29.12.1999**
(21) Application number: 96100572.5
(22) Date of filing: 16.01.1996
(51) Int. Cl.: B60T 15/00

(54) **Railroad vehicle brake control assembly**
Bremssteuervorrichtung für Schienenfahrzeuge
Dispositif de contrôle de freinage pour véhicules ferroviaires

(30) Priority: 20.01.1995 IT TO950039
(43) Date of publication of application: 24.07.1996
(73) Proprietor: SAB WABCO S.p.A., I-10045 Piossasco (Torino) (IT)
(72) Inventor: Barberis, Dario, I-10134 Torino (IT)
(74) Representative: Jorio, Paolo, Dr. Ing.

(56) References cited:
- EP-A- 0 203 894
- EP-A- 0 278 928
- EP-A- 0 292 830
- DE-A- 3 213 242
- DE-A- 4 305 679

## Description

The present invention relates to a railroad vehicle brake control assembly.

More specifically, the present invention relates to a control assembly of the type described and illustrated in Italian Patent Applications n. 67282-A/85 and n. 67097-A/87 filed respectively on 22/03/1985 and 13/02/1987 by the present Applicant, and comprising a main air pipe connected to a compressed air source; an air brake pipe connected by a number of distributors to a corresponding number of brake cylinders; an operating control or selector for selecting various operating conditions (go, overload, slow brake, fast brake, etc.); a relay valve presenting a control chamber, and interposed between the main pipe and the brake pipe to supply and discharge the brake pipe; a pair of solenoid valves, one for supplying and the other for discharging the control chamber of the relay valve; and an isolating valve interposed between the brake pipe and the relay valve to disconnect the brake pipe.

As described in Patent Application n. 67282-A/85, under normal operating conditions, slow braking of a railroad vehicle is effected by energizing the discharge solenoid valve by means of the selector. As a result, the control chamber of the relay valve is depressurized, and the brake pipe is gradually discharged by the relay valve to activate the brake cylinders.

Release of the brake, on the other hand, is effected, again using the selector, by energizing the supply solenoid valve, which pressurizes the control chamber of the relay valve, which in turn is so positioned as to permit compressed air supply from the main pipe to the brake pipe.

Though used on practically all railroad vehicles, known control assemblies of the above type are less than satisfactory from the operating standpoint, and particularly as regards safety.

That is, known assemblies of the above type fail to provide for effecting and controlling slow braking of the vehicle in the event the isolating valve is inadvertently switched to the isolating position, or presents a defect such as to isolate the relay valve from the brake pipe.

In the above conditions, the isolating valve cuts off the compressed air supply completely between the brake pipe and the inlet/outlet of the relay valve, so that any attempt to reset the relay valve by means of the discharge solenoid valve or similar safety valves is ineffective in depressurizing the brake pipe. In other words, slow braking of the vehicle is disabled, and the only way it can be braked is by activating one or more fast exhaust valves interposed between the brake pipe and the insulating valve, thus resulting, however, in the vehicle being brought to a sharp stop.

It is an object of the present invention to provide a straightforward, low-cost control assembly designed to overcome the aforementioned drawback, and which at the same time provides for a high degree of reliability.

According to the present invention, there is provided a railroad vehicle brake control assembly, the assembly comprising a main air pipe connected pneumatically to a compressed air source; an air brake pipe connected to a number of brake actuators; a relay valve for supplying and discharging the brake pipe, and presenting a first inlet connected pneumatically to the main pipe, and a second compressed air inlet/outlet connected to the brake pipe; and isolating means interposed between the brake pipe and said second inlet/outlet, and which are activated to isolate said relay valve from the brake pipe; characterized in that it also comprises a depressurizing device for depressurizing the brake pipe, and located parallel to said isolating means to permit one-way flow of compressed air from said brake pipe to said second inlet/outlet, at least when said isolating means isolate said relay valve from said brake pipe, and the relay valve is set to discharge the brake pipe.

Said depressurizing device of the assembly as described above preferably comprises one-way valve means.

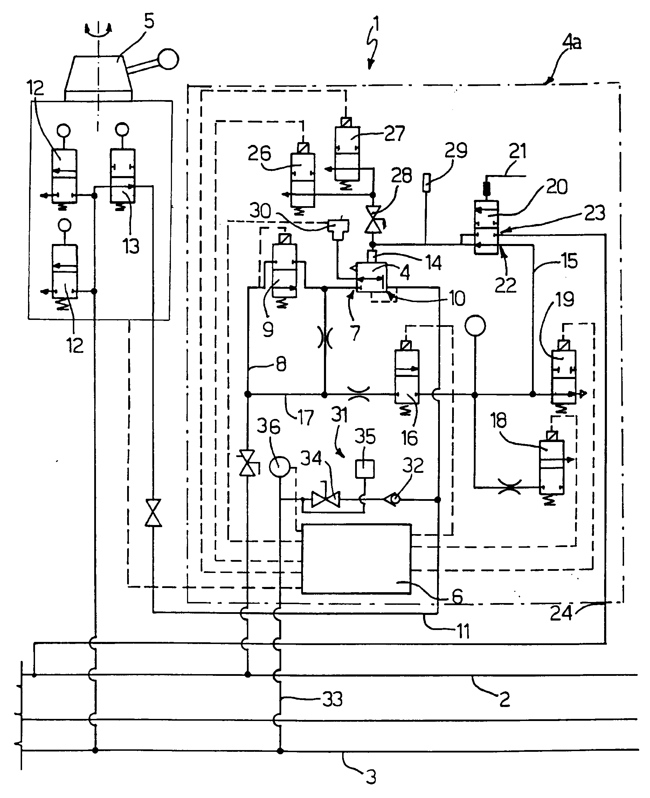

The invention will be described with reference to the accompanying drawing, which shows, schematically, a preferred, non-limiting embodiment of the railroad vehicle control assembly according to the present invention.

Number 1 in the accompanying drawing indicates an assembly for controlling a railroad vehicle (not shown).

Assembly 1 is of the type described and illustrated in Italian Patent Applications n. 67282-A/85 and n. 67097-A/87, and comprises a main air pipe 2 connected to a compressed air source (not shown), and an air brake pipe 3 connected by a number of known distributors (not shown) to a number of known air brake cylinders (not shown).

Assembly 1 also comprises a known relay valve 4 interposed between pipes 2 and 3 and forming part of an electropneumatic circuit 4a; and a lever-operated control or selector 5, which may be set to a number of different operating positions, each corresponding to a different operating mode of circuit 4a, and which, in each of said operating positions, provides for supplying an electric reference signal, generated for example by a potentiometer (not shown), to a known electronic control unit 6 also forming part of circuit 4a.

More specifically, relay valve 4 presents a first inlet 7 connected to main pipe 2 by a conduit 8 fitted with a known two-position on-off solenoid valve 9; and a second inlet/outlet 10 connected pneumatically to brake pipe 3 by a conduit 11.

Conduit 11 is fitted with two identical known mechanically operated, monostable, fast exhaust valves 12, which are switched manually by setting selector 5 to the "fast" position; and, between valves 12 and relay valve 4, conduit 11 presents an isolating valve 13, which, in the example shown, is a mechanically operated, normally-open, monostable type switched manually by setting selector 5 to the "isolate" position. Alternatively, according to a variation not shown, isolating valve 13 is replaced by a solenoid valve, which is switched by supplying it with an appropriate electric signal.

The control chamber 14 of relay valve 4 is connected by a conduit 15 to the outlet of a supply or brake release solenoid valve 16, the inlet of which is connected by a conduit 17 to main pipe 2, and which is a monostable, two-position, normally-closed type connected electrically to unit 6. Between solenoid valve 16 and control chamber 14, conduit 15 is connected to the inlet of a monostable, two-position, normally-closed discharge or brake solenoid valve 18 also connected electrically to unit 6.

As shown in the accompanying drawing, between discharge solenoid valve 18 and relay valve 4, conduit 15 presents a monostable, two-position, normally-open safety solenoid valve 19 connected electrically to unit 6 and designed, in use, to fully discharge flow, in use, through solenoid valve 16.

Between safety solenoid valve 19 and relay valve 4, conduit 15 presents a known selector or bypass valve assembly 20 activated manually by a control 21 and presenting a first port connected pneumatically to control chamber 14, and two second ports 22 and 23 respectively connected pneumatically to conduit 15 and to the outlet of an auxiliary conduit 24, the inlet of which communicates with main pipe 2 via a known self-regulating tap (not shown).

As shown in the accompanying drawing, assembly 1 also comprises a further two monostable, two-position discharge solenoid valves 26, 27 in parallel with each other and connected to unit 6. Solenoid valves 26 and 27 present respective inlets connected pneumatically to control chamber 14 via the interposition of a tap 28, are connected electrically to unit 6, and are controlled by automatic on-vehicle devices such as the signal repeater, invigilator, etc.

Assembly 1 also comprises a pressure limiting valve 29 along conduit 15, between valve assembly 20 and control chamber 14. According to a variation, valve 29 is replaced by a pressure regulating valve.

Assembly 1 also comprises a transducer 30 associated with and for detecting, in use, malfunctioning of relay valve 4. According to a preferred embodiment, relay valve 4 comprises two elastic diaphragms (not shown) facing each other and defining a chamber with which transducer 30 is associated to supply unit 6 with an electric signal proportional to the pressure inside the chamber.

Assembly 1 also comprises a depressurizing device 31 for depressurizing brake pipe 3, and which is located in parallel with isolating valve 13 to permit, in use, compressed air flow from brake pipe 3 to second inlet/outlet 10 of relay valve 4 when slow braking. More specifically, device 31 provides for generating the above compressed air flow when isolating valve 13 is set to the isolating setting or, for any reason, such as a malfunction, cuts off air flow to and from relay valve 4 when this is set to discharge brake pipe 3.

More specifically, device 31 comprises a one-way or nonreturn valve 32 with the inlet connected to brake pipe 3 by a conduit 33, and the outlet connected pneumatically to conduit 11, between relay valve 4 and valve 13.

Device 31 also comprises a tap 34 along conduit 33; a pressure switch 35 interposed between the brake pipe and tap 34, for supplying information relative to pressurization of brake pipe 3; and a known pressure transducer 36 located along conduit 33, between brake pipe 3 and pressure switch 35, and connected electrically to unit 6 to supply it with electric signals indicating the pressure in brake pipe 3.

Operation of assembly 1 will now be described as of the condition in which, for any reason, isolating valve 13 is set to the isolating setting or presents a malfunction such as to isolate brake pipe 3 completely from relay valve 4, and braking of the vehicle is required.

As of the above condition, assembly 1 provides for both "fast" and any other type of braking operation in substantially the same way as known assemblies in the non-isolated condition.

More specifically, "fast" braking is effected by switching valves 12 manually to the discharge settings and energizing solenoid valve 9, which cuts of air flow from main pipe 2 to inlet 7 of relay valve 4 and rapidly depressurizes brake pipe 3 to immediately brake the vehicle.

Slow braking, on the other hand, is effected by maintaining valves 12 in the stable closed position shown in the accompanying drawing, and by energizing discharge valve 18 to depressurize control chamber 14 of relay valve 4, which in turn discharges conduit 11; the resulting pressure difference between the inlet and outlet of nonreturn valve 32 causes air to flow to inlet/outlet 10 of relay valve 4 and immediately depressurizes brake pipe 3, which is detected by both pressure switch 35 and transducer 36, and which, as is known, activates the brake cylinders (not shown).

Alternatively, or in the event of malfunctioning of solenoid valve 18 and/or 16, control chamber 14 of relay valve 4 is depressurized by also de-energizing valve 19, which, as stated, provides for discharging all the air through solenoid valve 16.

Assembly 1 also provides for automatically braking the vehicle in particular operating conditions, e.g. following operation of the signal repeater (known and not shown), in which case, at least one of solenoid valves 26, 27 is switched by the automatic on-vehicle devices (not shown) to the discharge position in which, when tap 28 is open, it discharges control chamber 14 to depressurize brake pipe 3 via conduit 33, tap 34 and nonreturn valve 32.

Similarly, as compared with known assemblies, device 31 provides for extending the scope of the breakdown or "dépannage" device (not shown), which may thus also be operated even when valve 13 cuts off compressed air flow to relay valve 4.

Release of the brake, on the other hand, may only be effected by resetting isolating valve 13 to the open position (attached drawing). By virtue of the particular location of nonreturn valve 32, in fact, this provides for air flow from brake pipe 3 to the drain, but not vice versa, so that, under no circumstances, is it possible to supply brake pipe 3 to release the brake when valve 13 is set to the isolating position.

Valve 20 evidently provides for further improving the safety of assembly 1 by bypassing or isolating solenoid valves 16, 18, 19 and pressurizing control chamber 14 in the event of malfunctioning of supply solenoid valve 16 or electricity failure.

Control assembly 1 as described therefore provides, in an extremely straightforward manner, for fast and slow braking, automatic braking (by the automatic devices on the vehicle), and breakdown operation of the brake or "dépannage" braking, even in the event, for any reason, valve 13 cuts off air flow to and from relay valve 4.

Even in the above situation, in fact, depressurizing device 31 in parallel with isolating valve 13 provides, when relay valve 4 is set to discharge brake pipe 3, for one-way discharging brake pipe 3. In other words, device 31 provides for bypassing isolating valve 13 to discharge brake pipe 3, while at the same time preventing it from being recharged or re-pressurized, thus enabling the control assembly, as compared with known assemblies, to operate safely even in the event of component failure or an error on the part of the operator.

The control assembly as described above therefore provides for discharging brake pipe 3 with no need for additional or auxiliary exhausts, which are unreliable and would result in additional local leakage within the circuit.

The assembly as described is also highly reliable, by virtue of being straightforward in design and featuring commonly used components of proven reliability and efficiency, and is therefore extremely cheap to produce.

Clearly, changes may be made to assembly 1 as described and illustrated herein without, however, departing from the scope of the present invention. In particular, device 31 may be replaced by any other device designed to perform the same functions.

## Claims

1. A railroad vehicle brake control assembly (1), the assembly (1) comprising a main air pipe (2) connected pneumatically to a compressed air source; an air brake pipe (3) connected to a number of brake actuators; a relay valve (4) for supplying and discharging the brake pipe (3), and presenting a first inlet (7) connected pneumatically to the main pipe (2), and a second compressed air inlet/outlet (10) connected to the brake pipe (3); and isolating means (13) interposed between the brake pipe (3) and said second inlet/outlet (10), and which are activated to isolate said relay valve (4) from the brake pipe (3); characterized in that it also comprises a depressurizing device (31) for depressurizing the brake pipe (3), and located parallel to said isolating means (13) to permit one-way flow of compressed air from said brake pipe (3) to said second inlet/outlet (10), at least when said isolating means (13) isolate said relay valve (4) from said brake pipe (3), and the relay valve (4) is set to discharge the brake pipe (3).

2. An assembly as claimed in Claim 1, characterized in that said depressurizing device (31) comprises one-way valve means (32).

3. An assembly as claimed in Claim 2, characterized in that said one-way valve means comprise a nonreturn valve (32).

4. An assembly as claimed in Claim 2 or 3, characterized in that said depressurizing device (31) also comprises pressure indicating means (35) upstream from said one-way valve means (32) in said compressed air flow direction.

5. An assembly as claimed in any one of the foregoing Claims from 2 to 4, characterized in that said depressurizing device (31) also comprises first tap valve means (34) upstream from said one-way valve means (32) in said compressed air flow direction.

6. An assembly as claimed in any one of the foregoing Claims, characterized in that said relay valve (4) presents a control chamber (14); and in that it also comprises first discharge valve means (18) for discharging said control chamber (14) and activated by an operator; and second discharge valve means (26, 27) for discharging said control chamber (14), and which are located parallel to said first discharge valve means (18) and are activated automatically by a control assembly in particular operating conditions.

7. An assembly as claimed in Claim 6, characterized in that it also comprises further tap valve means (28) interposed between said control chamber (14) and said second discharge valve means (26, 27), and for preventing, in use, compressed air flow to said second discharge valve means (26, 27).

8. An assembly as claimed in any one of the foregoing Claims, characterized in that said relay valve (4) presents a control chamber (14); and in that it also comprises supply valve means (16) for supplying said control chamber (14); and pressure limiting means (29) interposed between said supply valve means (16) and said control chamber (14).

9. An assembly as claimed in any one of the foregoing Claims from 1 to 8, characterized in that said relay valve (4) presents a control chamber (14); and in that it also comprises supply valve means (16) for supplying said control chamber (14); and pressure regulating means (29) interposed between said supply valve means (16) and said control chamber (14).

10. An assembly as claimed in any one of the foregoing Claims, characterized in that it also comprises pressure detecting means (30) connected to and for detecting, in use, malfunctioning of said relay valve (4).

## Patentansprüche

1. Bremssteuervorrichtung (1) für Schienenfahrzeuge, wobei die Vorrichtung bzw. Anordnung (1) eine Hauptluftleitung (2), welche pneumatisch mit einer Druckluftquelle verbunden ist, eine Luftbremsleitung (3), welche mit einer Anzahl von Bremsbetätigungseinrichtungen verbunden ist, ein Schalt- bzw. Servoventil (4) zum Zuführen bzw. Beaufschlagen und Entlasten der Bremsleitung (3), welches einen ersten Einlaß (7), welcher pneumatisch mit der Hauptleitung (2) verbunden ist, und einen zweiten Druckluft-Einlaß/Auslaß (10) aufweist, welcher mit der Bremsleitung (3) verbunden ist, und Isolier- bzw. Trenn- bzw. Absperreinrichtungen (13) umfaßt, welche zwischen der Bremsleitung (3) und dem zweiten Einlaß/ Auslaß (10) zwischengeschaltet sind und welche aktiviert werden, um das Steuer- bzw. Servoventil (4) von der Bremsleitung (3) abzusperren bzw. zu trennen bzw. zu isolieren, dadurch gekennzeichnet, daß sie auch eine Druckabsenk- bzw. -ablaßvorrichtung (31) zum Drucklosmachen der Bremsleitung (3) umfaßt, welche parallel zu den Trenneinrichtungen (13) angeordnet ist, um einen Druckluftstrom in einer Richtung von der Bremsleitung (3) zu dem zweiten Einlaß/Auslaß (10) zumindest zu erlauben, wenn die Trenneinrichtungen (13) das Servoventil (4) von der Bremsleitung (3) abtrennen, und das Servoventil (4) eingestellt ist, um die Bremsleitung (3) zu entlasten bzw. zu entleeren.

2. Vorrichtung nach Anspruch 1, dadurch gekennzeichnet, daß die Druckabsenkvorrichtung (31) Einweg-Ventileinrichtungen (32) umfaßt.

3. Vorrichtung nach Anspruch 2, dadurch gekennzeichnet, daß die EinwegVentileinrichtungen ein Sperr- bzw. Rückschlagventil (32) umfassen.

4. Vorrichtung nach Anspruch 2 oder 3, dadurch gekennzeichnet, daß die Druckabsenkvorrichtung (31) auch Druckanzeigeeinrichtungen (35) stromaufwärts von den Einweg-Ventileinrichtungen (32) in Richtung des Druckluftstroms umfaßt.

5. Vorrichtung nach einem der vorangehenden Ansprüche 2 bis 4, dadurch gekennzeichnet, daß die Druckabsenkvorrichtung (31) auch erste Ablaß-Ventileinrichtungen (34) stromaufwärts von den Einweg-Ventileinrichtungen (32) in der Druckluft-Strömungsrichtung aufweist.

6. Vorrichtung nach einem der vorangehenden Ansprüche, dadurch gekennzeichnet, daß das Servoventil (4) eine Steuerkammer (14) aufweist und daß sie auch erste Entlade-Ventileinrichtungen (18) zum Entladen bzw. Entlasten der Steuerkammer (14), welche durch ein Betätigungsglied bzw. eine Bedienungsperson aktiviert sind, und zweite Entlade-Ventileinrichtungen (26, 27) zum Entladen bzw Entlasten der Steuerkammer (14) umfaßt, welche parallel zu den ersten Entlade-Ventileinrichtungen (18) angeordnet sind und automatisch durch eine Regel- bzw. Steuervorrichtung unter bestimmten Betriebsbedingungen aktiviert bzw. betätigt sind.

7. Vorrichtung nach Anspruch 6, dadurch gekennzeichnet, daß sie auch weitere Ablaß-Ventileinrichtungen (28) aufweist, welche zwischen der Steuerkammer (14) und den zweiten Entlade-Ventileinrichtungen (26, 27) angeordnet sind und welche bei der Verwendung einen Druckluftstrom zu den zweiten Entlade-Ventileinrichtungen (26, 27) verhindern.

8. Vorrichtung nach einem der vorangehenden Ansprüche, dadurch gekennzeichnet, daß das Servoventil (4) eine Steuerkammer (14) aufweist und daß es auch Zufuhr-Ventileinrichtungen (16) zum Zuführen zu der Steuerkammer (14) und Druckbegrenzungseinrichtungen (29) umfaßt, welche zwischen den Zufuhr-Ventileinrichtungen (16) und der Steuerkammer (14) zwischengeschaltet sind.

9. Vorrichtung nach einem der vorangehenden Ansprüche 1 bis 8, dadurch gekennzeichnet, daß das Servoventil (4) eine Steuerkammer (14) aufweist und daß sie auch Zufuhr-Ventileinrichtungen (16) zum Zuführen zu der Steuerkammer (14) und Druckregeleinrichtungen (29) umfaßt, welche zwischen den Zufuhr-Ventileinrichtungen (16) und der Steuerkammer (14) zwischengeschaltet sind.

10. Vorrichtung nach einem der vorangehenden Ansprüche, dadurch gekennzeichnet, daß sie auch Druckdetektionseinrichtungen (30) umfaßt, welche mit dem Servoventil (4) verbunden sind und in der Verwendung eine Fehlfunktion desselben detektieren.

## Revendications

1. Ensemble de commande de frein de véhicule de chemin de fer (1), l'ensemble (1) comportant un tuyau d'air principal (2) relié pneumatiquement à une source d'air comprimé, un tuyau de freinage à air (3) relié à plusieurs actionneurs de frein, et une servovalve (4) pour alimenter et décharger le tuyau de freinage (3) et présentant une première entrée (7) reliée pneumatiquement au tuyau principal (2), et une seconde entrée/sortie d'air comprimé (10) reliée au tuyau de freinage (3) et des moyens d'isolement (13) interposés entre le tuyau de freinage (3) et ladite seconde entrée/sortie (10), et qui sont activés pour isoler ladite servovalve (4) par rapport au tuyau de freinage (3), caractérisé en ce qu'il comporte aussi un dispositif de dépressurisation (31) pour dépressuriser le tuyau de freinage (3), et positionné parallèlement auxdits moyens d'isolement (13) pour permettre un écoulement unidirectionnel d'air comprimé depuis ledit tuyau de freinage (3) vers ladite seconde entrée/sortie (10), au moins lorsque lesdits moyens isolants (13) isolent ladite servovalve (4) par rapport audit tuyau de freinage (3), et la servovalve (4) est établie pour évacuer le tuyau de freinage (3).

2. Ensemble selon la revendication 1, caractérisé en ce que ledit dispositif de dépressurisation (31) comporte des moyens formant vanne unidirectionnelle (32).

3. Ensemble selon la revendication 2, caractérisé en ce que lesdits moyens formant vanne unidirectionnelle sont constitués d'un clapet anti-retour (32).

4. Ensemble selon la revendication 2 ou 3, caractérisé en ce que ledit dispositif de dépressurisation (31) comporte aussi des moyens indicateurs de pression (35) situés en amont desdits moyens formant clapet unidirectionnel (32) dans ladite direction d'écoulement d'air comprimé.

5. Ensemble selon l'une quelconque des revendications 2 à 4, caractérisé en ce que ledit dispositif de dépressurisation comporte aussi des premiers moyens formant robinet (34) situés en amont par rapport auxdits moyens formant clapet unidirectionnel (32) dans ladite direction d'écoulement d'air comprimé.

6. Ensemble selon l'une quelconque des revendications précédentes, caractérisé en ce que ladite servovalve (4) présente une chambre de commande (14) et en ce qu'il comporte aussi des premiers moyens formant vanne d'évacuation (18) pour évacuer ladite chambre de commande (14) et avec un actionnement par un opérateur, et des seconds moyens formant vanne d'évacuation (26, 27) pour évacuer ladite chambre de commande (14), et qui sont positionnés en parallèle auxdits premiers moyens formant vanne d'évacuation (18) et sont activés automatiquement par un ensemble de commande dans des conditions de fonctionnement particulières.

7. Ensemble selon la revendication 6, caractérisé en ce qu'il comporte aussi des moyens formant robinet supplémentaire (28) interposé entre ladite chambre de commande (14) et lesdits seconds moyens formant vanne d'évacuation (26, 27) et destinés à empêcher, en utilisation, un écoulement d'air comprimé vers lesdits seconds moyens formant vanne d'évacuation (26, 27).

8. Ensemble selon l'une quelconque des revendications précédentes, caractérisé en ce que ladite servovalve (4) présente une chambre de commande (14), et en ce qu'il comporte aussi des moyens formant vanne d'alimentation (16) destinés à alimenter ladite chambre de commande (14), et des moyens de limitation de pression (29) interposés entre lesdits moyens formant vanne d'alimentation (16) et ladite chambre de commande (14).

9. Ensemble selon l'une quelconque des revendications 1 à 8, caractérisé en ce que ladite servovalve (4) présente une chambre de commande (14), et en ce qu'il comporte aussi des moyens formant vanne d'alimentation (16) pour alimenter ladite chambre de commande (14), et des moyens de régulation de pression (29) interposés entre lesdits moyens formant vanne d'alimentation (16) et ladite chambre de commande (14).

10. Ensemble selon l'une quelconque des revendications précédentes, caractérisé en ce qu'il comporte aussi des moyens de détection de pression (30) reliés à ladite servovalve (4) et destinés à détecter, en utilisation, un mauvais fonctionnement de celle-ci.
